# EUROPEAN PATENT SPECIFICATION

(11) **EP 2 781 415 B1**
(45) Date of publication and mention of the grant of the patent: **18.03.2015**
(21) Application number: 14157551.4
(22) Date of filing: 04.03.2014
(51) Int. Cl.: B60R 25/24

(54) **Remote control unit registration method, remote control system for motor vehicle, and motor vehicle**
Fernsteuerungseinheitsregistrierungsverfahren, Fernsteuerungssystem und Kraftfahrzeug
Procédé d'enregistrement d'unité de commande à distance, système de commande à distance pour véhicule et véhicule à moteur

(30) Priority: 22.03.2013 JP 2013060590
(43) Date of publication of application: 24.09.2014
(73) Proprietor: Yamaha Hatsudoki Kabushiki Kaisha, Iwata-shi, Shizuoka 438-8501 (JP)
(72) Inventor: Maekawa, Koji, Iwata-shi, Shizuoka 438-8501 (JP)
(74) Representative: Grünecker, Kinkeldey, Stockmair & Schwanhäusser

(56) References cited:
- CN-U- 201 646 641
- DE-A1- 10 255 805
- US-B1- 6 501 369

## Description

The present invention relates to a method for registering a remote control unit into a receiver installed in a vehicle body, a remote control system for motor vehicle capable of registering the remote control unit, and a motor vehicle that includes the remote control system for motor vehicle.

JP 2008-63932 A discloses a theft prevention system including a lock controller installed in a vehicle body and a portable unit carried by a user. The lock controller wirelessly receives ID information unique to the portable unit from the portable unit and authenticates the portable unit based on the ID information. If the ID information has been registered in advance into the lock controller, the portable unit is authenticated to be a legitimate portable unit and the lock controller locks/unlocks a target device.

The lock controller includes a storage portion for storing the ID of the portable unit. That is, if the ID received from the portable unit is registered in the storage portion, the portable unit is authenticated to be legitimate. When a predetermined operation is performed on a plurality of switches included in the motor vehicle, the lock controller is put in a state of accepting registration for change or addition of a portable unit ID.

From the standpoint of security, the registration for change or addition of an ID of a portable unit is intended to be performed by a worker at a dealer, etc., and is not intended to be executed by a general user. However, with the arrangement of JP 2008-63932 A, the lock controller is put in the state of accepting registration for change or addition of a portable unit ID when the predetermined operation is performed on the plurality of switches included in the motor vehicle. The registration for ID change or addition may thus be accepted inadvertently when the user performs the corresponding operation by chance. In order to prevent such inadvertent registration, the predetermined operation of the plurality of switches is preferably made sufficiently complicated. However, if the operation is complicated, the operation that a worker must perform to register the change or addition of a portable unit ID becomes complicated. Transition of the lock controller into the ID registration mode may thus be prevented or the man-hours required for ID registration may increase due to operation errors. US 6501369 B discloses a system according to the preamble of claim 9.

It is the object of the present invention to provide a method for registering a remote control unit into a remote control receiving unit, a remote control system for motor vehicle and a motor vehicle that includes such remote control system wherein registration can be done in an easy and reliable manner. According to the present invention said object is solved by a method for registering a remote control unit into a remote control receiving unit having the features of independent claim 1. Moreover, said object is solved by a remote control system for motor vehicle having the features of independent claim 9. Furthermore, said object is solved by a motor vehicle according to claim 18. Preferred embodiments are laid down in the dependent claims.

A preferred embodiment provides a method for registering a remote control unit into a remote control receiving unit connected via a harness to a device installed in a vehicle body. The method includes a step of connecting a registration-dedicated harness between the harness and the remote control receiving unit and making the remote control receiving unit transition to a registration mode, and a step of making an identification code be generated from the remote control unit and making the identification code be received by the remote control receiving unit in the registration mode to register the identification code, received by the remote control receiving unit, into a registration memory.

The device installed in the vehicle body and the remote control receiving unit are connected to each other via a harness. By connecting the registration-dedicated harness between the harness and the remote control receiving unit, the remote control receiving unit can be made to transition to the registration mode. By making the identification code be generated from the remote control unit in the state where the remote control receiving unit has transitioned to the registration mode, the identification code can be registered into the registration memory. The remote control receiving unit can thus be made to transition to the registration mode using the registration-dedicated harness that is not used ordinarily, and therefore the problem of the identification code of the remote control unit being registered inadvertently into the registration memory due to an operation by a user does not occur. Moreover, the remote control receiving unit can be made to transition to the registration mode by a simple process of connecting the registration-dedicated harness and therefore the work load of a worker who registers the identification code of the remote control unit is low and the possibility of operation error is also reduced. The identification code can thus be registered by a simple operation. A remote control unit registration method that enables the identification code to be registered by a simple operation while avoiding inadvertent registration of the identification code can thus be provided.

With a preferred embodiment, the registration-dedicated harness includes a registration command signal line for inputting a registration mode transition command signal into the remote control receiving unit, a predetermined voltage level line, and a switch connecting the predetermined voltage level line to the registration command signal line. The step of making the remote control receiving unit transition to the registration mode may include a step of making the switch conduct.

With this method, the remote control receiving unit can be made to transition to the registration mode by performing the operations of connecting the registration-dedicated harness and further making the switch conduct. The operator can thus accurately ascertain the timing at which the remote control receiving unit transitions to the registration mode. Therefore, for example, if a restriction is placed on the duration of the registration mode, the process of connecting the registration-dedicated harness may be performed in advance and the remote control receiving unit may be made to transition to the registration mode by operating the switch when the preparation of the remote control unit for which the identification code is to be registered is completed. The remote control unit can thereby be registered more smoothly.

With a preferred embodiment, the step of registering the identification code into the registration memory includes a step of making identification codes be generated successively from a plurality of remote control units when the remote control receiving unit is in the registration mode to successively register the plurality of identification codes into the registration memory.

By this method, the identification codes of a plurality of remote control units can be registered into the registration memory. The plurality of remote control units can thereby be associated with a single remote control receiving unit. Also, registrations of the identification codes from the plurality of remote control units are accepted in the registration mode and the plurality of remote control units can thus be registered smoothly.

With a preferred embodiment, the method further includes a step in which the remote control receiving unit automatically ends the registration mode when a predetermined number of identification codes are registered into the registration memory.

With this method, the number of registrable identification codes is restricted to the predetermined number and when the registration of the predetermined number of identification codes ends, the registration mode is ended automatically. Identification codes beyond those which are necessary are thereby prevented from being registered inadvertently and the security property can be improved. Also, when the predetermined number of identification codes have been registered, the registration mode is ended without requiring an operation and the remote control unit registration process can thus be simplified.

With a preferred embodiment, the method further includes a step in which the remote control receiving unit automatically ends the registration mode when a predetermined time elapses from the transition to the registration mode.

With this method, the duration of the registration mode is restricted to the predetermined time, and therefore identification codes beyond those which are necessary are prevented from being registered inadvertently and the security property can be improved. Also, the registration mode is ended without requiring an operation by a worker and the remote control unit registration process can thus be simplified.

With a preferred embodiment, the remote control receiving unit is connected to a notification unit, and the method further includes a step in which the remote control receiving unit actuates the notification unit when the transition to the registration mode is performed and when the registration mode is ended.

With this method, the notification unit is actuated at the point of transition to the registration mode and at the end of the registration mode, and the operator can thus be notified of the start and end of the registration mode. The identification code of the remote control unit can thereby be registered reliably and registration of identification codes beyond those which are necessary can be avoided. The remote control unit registration process can thus be performed smoothly.

With a preferred embodiment, when an identification code is registered into the registration memory, the remote control receiving unit actuates the notification unit.

With this method, when the identification code is registered, the registration is notified to the operator by the notification unit. The operator can thereby confirm the registration of the identification code and can thus perform the identification code registration reliably. The remote control unit registration process can thus be performed smoothly.

With a preferred embodiment, a plurality of identification codes are registrable into the registration memory, and when a new identification code is registered into the registration memory, the remote control receiving unit actuates the notification unit to express the number of identification codes registered into the registration memory.

With this method, the operator can confirm the number of registered identification codes in addition to the fact that an identification code has been registered. The identification codes can thereby be registered reliably and registration of unnecessary identification codes can be avoided. The remote control unit registration process can thus be performed smoothly.

A preferred embodiment provides a remote control system for motor vehicle including a harness connected to a device installed in a vehicle body, a remote control receiving unit disposed in the vehicle body, having a registration memory registering an identification code of a remote control unit, for receiving and accepting a command signal, including an identification code registered in the registration memory, from the remote control unit, and a registration-dedicated harness interposed between the harness and the remote control receiving unit, connecting the harness and the remote control receiving unit, for making the remote control receiving unit transition to a registration mode for registering an identification code, generated by the remote control unit, into the registration memory.

With this arrangement, the remote control receiving unit can be made to transition to the registration mode by connecting the registration-dedicated harness between the harness, connected to the device installed in the vehicle body, and the remote control receiving unit. During ordinary use, the registration-dedicated harness is unnecessary and therefore as long as the registration-dedicated harness is removed, inadvertent transition of the remote control receiving unit to the registration mode by operation of a user will not occur. On the other hand, an operator (worker) intending to register an identification code can make the remote control receiving unit transition to the registration mode easily by connecting the registration-dedicated harness. The remote control receiving unit can thus be made to transition to the registration mode using the registration-dedicated harness that is not used ordinarily, and the problem of the identification code of the remote control unit being registered inadvertently into the registration memory due to an operation by a user thus does not occur. Moreover, the remote control receiving unit can be made to transition to the registration mode by a simple process of connecting the registration-dedicated harness and therefore the work load of a worker who registers the identification code of the remote control unit is low and the possibility of operation error is also reduced. A remote control system for motor vehicle that enables the identification code to be registered by a simple operation while avoiding inadvertent registration of the identification code can thus be provided.

In a preferred embodiment, the registration-dedicated harness includes a registration command signal line for inputting a registration mode transition command signal into the remote control receiving unit, a predetermined voltage level line, and a switch connecting the predetermined voltage level line to the registration command signal line.

With this arrangement, the remote control receiving unit can be made to transition to the registration mode by performing the operations of connecting the registration-dedicated harness and further making the switch conduct. The operator can thus accurately ascertain the timing at which the remote control receiving unit transitions to the registration mode. Therefore, for example, if a restriction is placed on the duration of the registration mode, the process of connecting the registration-dedicated harness may be performed in advance and the remote control receiving unit may be made to transition to the registration mode by operating the switch when the preparation of the remote control unit for which the identification code is to be registered is completed. The remote control unit can thereby be registered more smoothly.

In a preferred embodiment, the remote control receiving unit is configured to accept and register a plurality of identification codes successively into the registration memory in the registration mode.

With this arrangement, the identification codes of a plurality of remote control units can be registered into the registration memory. The plurality of remote control units can thereby be associated with a single remote control receiving unit. Also, registrations of the identification codes from the plurality of remote control units are accepted in the registration mode and the plurality of remote control units can thus be registered smoothly.

In a preferred embodiment, the remote control receiving unit is configured to automatically end the registration mode when a predetermined number of identification codes are registered into the registration memory.

With this arrangement, the number of registrable identification codes is restricted to the predetermined number and identification codes beyond those which are necessary are thus prevented from being registered inadvertently and the security property can be improved. Also, when the predetermined number of identification codes have been registered, the registration mode is ended without requiring an operation and the remote control unit registration process can thus be simplified.

In a preferred embodiment, the remote control receiving unit is configured to automatically end the registration mode when a predetermined time elapses from the transition to the registration mode.

With this arrangement, the duration of the registration mode is restricted to the predetermined time, and therefore identification codes beyond those which are necessary are prevented from being registered inadvertently and the security property can be improved. Also, the registration mode is ended without requiring an operation by a worker and the remote control unit registration process can thus be simplified.

In a preferred embodiment, the remote control receiving unit is configured to be connectable to a notification unit disposed in the vehicle body, and the remote control receiving unit is arranged to actuate the notification unit when transitioning to the registration mode and when ending the registration mode.

With this arrangement, the notification unit is actuated at the point of transition to the registration mode and at the end of the registration mode and the operator can thus be notified of the start and end of the registration mode. The identification code of the remote control unit can thereby be registered reliably and registration of identification codes beyond those which are necessary can be avoided. The remote control unit registration process can thus be performed smoothly.

In a preferred embodiment, the remote control receiving unit actuates the notification unit when an identification code is registered into the registration memory.

With this arrangement, when the identification code is registered, the registration is notified to the operator by the notification unit. The operator can thus perform the identification code registration reliably. The remote control unit registration process can thus be performed smoothly.

In a preferred embodiment, a plurality of identification codes are registrable into the registration memory, and the remote control receiving unit is configured to actuate the notification unit to express the number of identification codes registered into the registration memory when a new identification code is registered into the registration memory.

With this arrangement, the operator can confirm the number of registered identification codes in addition to the fact that an identification code has been registered. The identification codes can thereby be registered reliably and registration of unnecessary identification codes can be avoided. The remote control unit registration process can thus be performed smoothly.

A preferred embodiment provides the remote control system for motor vehicle that further includes a remote control unit for generating a command signal that includes an identification code.

With this arrangement, a remote control system for motor vehicle, with which the command signal, including the identification code, is generated from the remote control unit, and the command signal is responded to by authentication of the identification code by a remote control receiving unit, can be provided.

A preferred embodiment provides a motor vehicle including a vehicle body in which the harness, the remote control receiving unit, and the registration-dedicated harness are disposed, a wheel mounted to the vehicle body, and a remote control system for motor vehicle having the features described above.

With this arrangement, a vehicle that includes the remote control system for motor vehicle, which enables an identification code to be registered by a simple operation while avoiding registration of an unnecessary identification code, can be provided.

The above and yet other objects, features, and effects of the present invention shall be made clear by the following description of the preferred embodiments in reference to the attached drawings.

### BRIEF DESCRIPTION OF THE DRAWINGS

FIG. 1 is a left side view for describing the arrangement of a motorcycle according to a preferred embodiment.
FIG. 2 is a front view of the motorcycle as viewed by a rider seated on a seat.
FIG. 3 is a perspective view for describing an arrangement of a key unit of the motorcycle.
FIG. 4 is an exploded perspective view of the key unit.
FIG. 5 is a perspective view of a key shutter device and a key cylinder included in the motorcycle.
FIG. 6A and 6B are plan views for describing the internal arrangement of the key shutter device.
FIG. 7 is a sectional view of a portion of the key shutter device in a state where the key shutter is at a closed position.
FIG. 8 is a block diagram for describing the electrical arrangement of a remote control key system installed in the motorcycle.
FIG. 9 is a conceptual diagram for describing the arrangement of the motorcycle when a key unit is registered into a remote control receiving unit.
FIG. 10 is a schematic arrangement diagram for describing the arrangement of a registration-dedicated harness used in registering the key unit.
FIG. 11 is a flowchart for describing the operation of a control unit included in the remote control receiving unit and shows a process for selecting between an ordinary mode and a registration mode.
FIG. 12 is a flowchart for describing the operation of the control unit included in the remote control receiving unit and shows the operation in the registration mode.

### DETAILED DESCRIPTION OF THE PREFERRED EMBODIMENTS

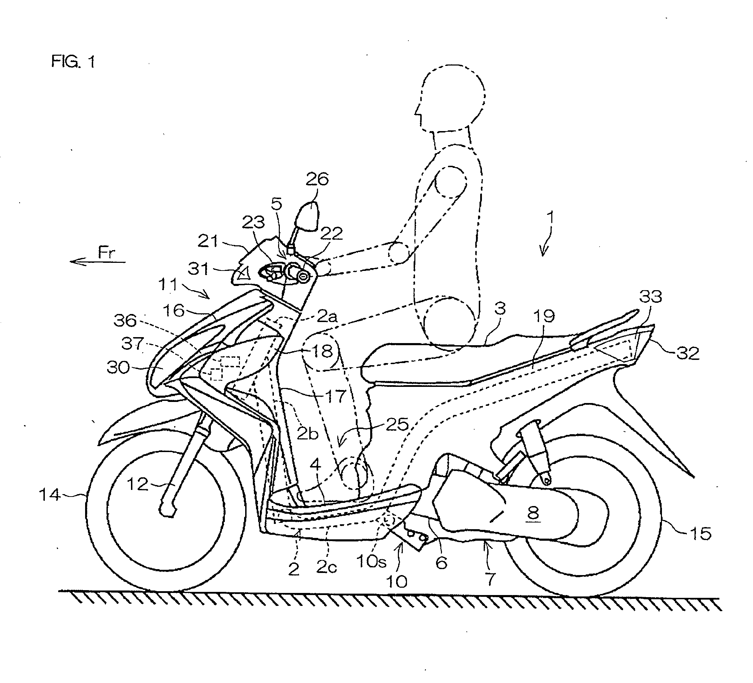

FIG. 1 is a left side view for describing the arrangement of a motor vehicle according to a preferred embodiment and shows the arrangement of a motorcycle 1 that is an example of a saddle type vehicle.

The motorcycle 1 according to the present preferred embodiment is a scooter type motorcycle. The motorcycle 1 includes a vehicle body frame 2 and a seat 3 on which a rider sits. In the following description, the respective directions of front/rear, right/left, and up/down, etc., refer to directions as viewed by the rider seated on the seat 3. The vehicle width direction refers to the direction extending to the right and left of the vehicle body. In the figures, the symbol Fr indicates the front of the vehicle body.

The vehicle body frame 2 includes a head pipe 2a, a front frame 2b, and a rear frame 2c. The front frame 2b extends rearward and downward from the head pipe 2a. The rear frame 2c extends rearward from the front frame 2b. The seat 3 is disposed above the rear frame 2c.

The motorcycle 1 includes a front wheel 14 and a rear wheel 15 that are respectively disposed at the front side and rear side of the vehicle body. The front wheel 14 is rotatably supported by the lower end portions of a front fork 12. The front fork 12 is rotatably supported by the head pipe 2a. A handle 5 is provided at an upper end of the front fork 12.

The motorcycle 1 includes a power unit 7. The power unit 7 is disposed lower than the seat 3. The power unit 7 includes an engine 6 as a drive source and a transmission case 8. The transmission case 8 houses a power transmitting mechanism transmitting the power of the engine 6 toward the rear wheel 15 and supports the rear wheel 15. The power unit 7 is of a so-called unit swinging type and swings together with the rear wheel 15 in the up/down direction around a pivot shaft 10s. The power unit 7 is swingably supported by the vehicle body frame 2 via a link mechanism 10.

The motorcycle 1 includes a cover 11. The cover 11 is connected to a front portion of a foot board 4 and covers the front frame 2b. The cover 11 includes a front cover 16, an inner cover 17, pocket covers 18, a side cover 19, and a handle cover 21. The front cover 16 is mounted so as to cover the front sides of the head pipe 2a and the front frame 2b. The inner cover 17 is mounted so as to cover the rear sides of the head pipe 2a and the front frame 2b and is connected to the front cover 16. The handle cover 21 covers the handle 5 and is positioned above the inner cover 17.

A leg space 25, which is a space for placement of the legs of the rider seated on the seat 3 is defined between the seat 3 and the head pipe 2a in a side view. More specifically, the leg space 25 is defined behind the front cover 16 that covers the head pipe 2a, etc., and in front of the side cover 19 that covers the vehicle body below the seat 3. The legs of the rider are placed in the leg space 25, that is, behind the front cover 16. The motorcycle 1 includes the foot board 4 on which the rider places his/her feet. The foot board 4 is provided above the rear frame 2c.

The front cover 16 is provided with a front light unit 30. A headlamp that illuminates the front of the vehicle body is provided inside the front light unit 30. Front flashers 31 are provided at the right and left of the handle cover 21. A tail lamp 32 is provided behind the seat 3 at a tail portion of the side cover 19. A pair of rear flashers 33 are provided at the right and left of the tail lamp 32.

A remote control receiving unit 36 for remote control and a buzzer unit 37 that generates a buzzer sound are housed inside the front cover 16 and these are mounted on the vehicle body frame 2.

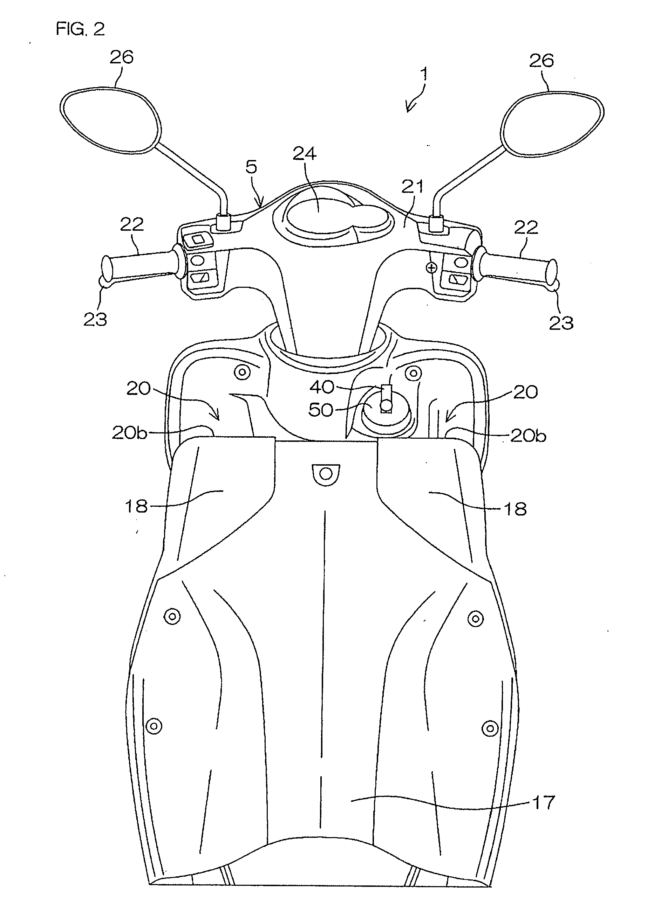

FIG. 2 is a front view of the motorcycle 1 as viewed by the rider seated on the seat 3.

The motorcycle 1 includes inner pockets 20. The inner pockets 20 are provided at a periphery of the head pipe 2a. More specifically, the inner pockets 20 are provided at the right and left sides of the head pipe 2a. The pocket covers 18 are connected to the front cover 16, extend rearward from the front cover 16, and define outer walls of the inner pockets 20. Each inner pocket 20 has an opening portion 20b opening upward. Small articles may be housed into the interior of each inner pocket 20 from the opening portion 20b.

A key shutter device 50 is provided further to the right than the center of the vehicle body and further to the inner side in the vehicle width direction than the right inner pocket 20. In FIG. 2, a key unit 40 is inserted in the key shutter device 50. The key shutter device 50 is a device for protecting a key cylinder included in the motorcycle 1. That is, the key shutter device 50 is arranged to close a key hole of the key cylinder and prevent access to the key hole when the motorcycle 1 is not being used.

The handle 5 includes a pair of grips 22 at the right and left sides. Of the pair of grips 22, the right side grip 22 is an accelerator grip for adjusting the output of the engine 6. Right and left brake levers 23 are respectively provided in front of the right and left grips 22. The handle cover 21 that covers the handle 5 has a meter unit 24 disposed at its central portion. A pair of rearview mirrors 26 are provided at the right and left of the meter unit 24.

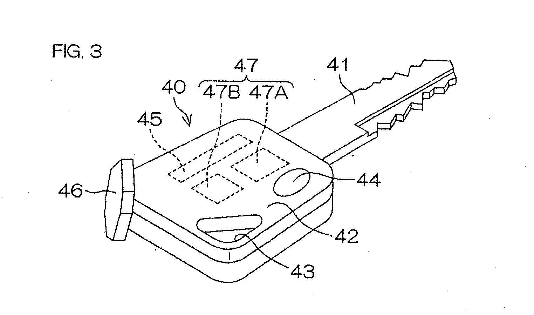

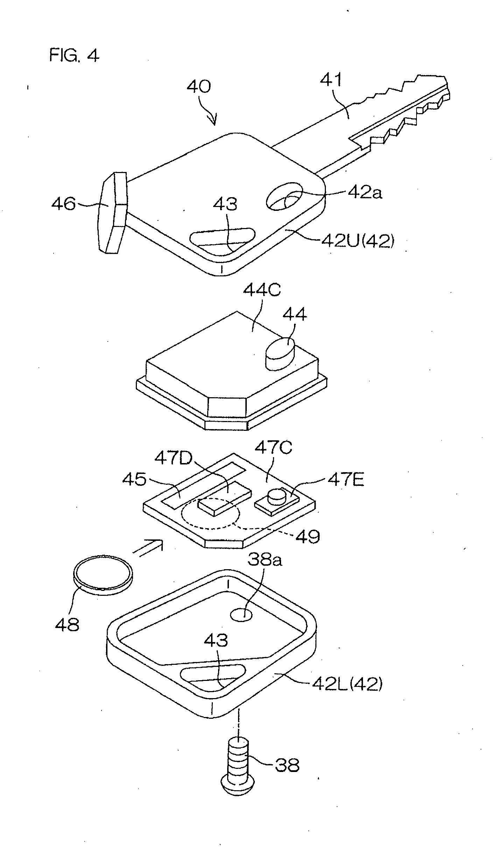

FIG. 3 is a perspective view for describing an arrangement of the key unit 40. FIG. 4 is an exploded perspective view of the key unit 40.

The key unit 40 includes a key 41 that is to be inserted into the key cylinder of the motorcycle 1 and a holder 42 that supports the key 41 and is to be gripped by a user. The holder 42 is made up of a resin-molded article and is molded with the key 41 being inserted therein. That is, the key 41 and the holder 42 are made integral by insert molding. The holder has a flat, rectangular parallelepiped shape. The key 41 is coupled to a substantially central portion of the front side of the holder 42. The key 41 extends in a direction perpendicular to the front side and extending along a main surface of the flat holder 42. An operation button 44 is disposed near a corner portion of the front side that is the key 41 side of the holder 42. A penetrating hole 43 that penetrates through the holder 42 is formed in one corner portion of the rear side of the holder 42 opposite to the key 41. The penetrating hole 43 may be used when coupling to a key holder, etc. A magnetic key 46 is provided at the other corner portion of the rear side of the holder 42. The magnetic key 46 is made integral to the holder 42. The magnetic key 46 is used to put the key shutter device 50 in the open state manually. An antenna 45 for irradiation of radio waves is housed in the interior of the holder 42. The operation button 44 and the antenna 45 are disposed side by side along a direction orthogonal to an axial direction of the key 41 (longitudinal direction of the key 41). Also in the present preferred embodiment, the antenna 45 is disposed in a band-like region extending in a direction parallel to the axial direction of the key 41.

The key unit 40 is a remote control unit according to the preferred embodiment.

As best shown in FIG. 4, the holder 42 includes an upper housing 42U that is molded integral to the key 41 and a lower housing 42L that is combined with the upper housing 42U. The upper housing 42U and the lower housing 42L are fixed to each other by a bolt 38 in a mutually fitted state. The bolt 38 is inserted through an insertion hole 38a formed in the lower housing 42L and is fastened to the upper housing 42U. An opening 42a for exposing the operation button 44 is formed in the upper housing 42U. The upper housing 42U and the lower housing 42L define a housing space in the interior of the holder 42. An electronic circuit 47, including a transmitter 47A and an identification code memory 47B, is housed in the housing space. Specifically, a circuit part 47D is mounted on a circuit board 47C, whereby the transmitter 47A and the identification code memory 47B are arranged. A conductor pattern making up the antenna 45 is also formed on the circuit board 47C. Also, a switch 47E, operated by the operation button 44, is mounted on the circuit board 47C. The operation button 44 is formed integral to a waterproof cover 44C made, for example, of silicone rubber. The waterproof cover 44C covers the electronic circuit making up the transmitter 47A, etc., and protects the electronic circuit from water entering from the opening 42a of the upper housing 42U. The circuit board 47C is further provided with a battery installation portion 49 for installing a battery 48 (cell) as a power supply. The battery 48 may be a button cell. A consumed battery 48 may be replaced as necessary by a new battery (unconsumed battery) by removing the bolt 38 and separating the upper housing 42U and the lower housing 42L.

With the present preferred embodiment, when the switch 47E is operated through the operation on the operation button 44 of the key unit 40, the transmitter 47A generates a command signal and radio waves corresponding to the command signal are radiated from the antenna 45. The command signal includes an identification code stored in the identification code memory 47B. The radio waves radiated from the key unit 40 are received by the remote control receiving unit 36 provided at the vehicle body side of the motorcycle 1. In response to the receiving of the command signal, the remote control receiving unit 36 performs an authentication process on the identification code in the command signal and then executes a so-called answerback operation. In the present preferred embodiment, the answerback operation includes blinking of the flashers 31 and 33, sounding of the buzzer unit 37, shutter opening operation of the key shutter device 50, illumination of the key hole, etc.

The flashers 31 and 33 are an example of a light emitting unit that generates a light signal that can be recognized by the user. Also, the buzzer unit 37 is an example of a sound signal generating unit that generates a sound signal that can be recognized by the user.

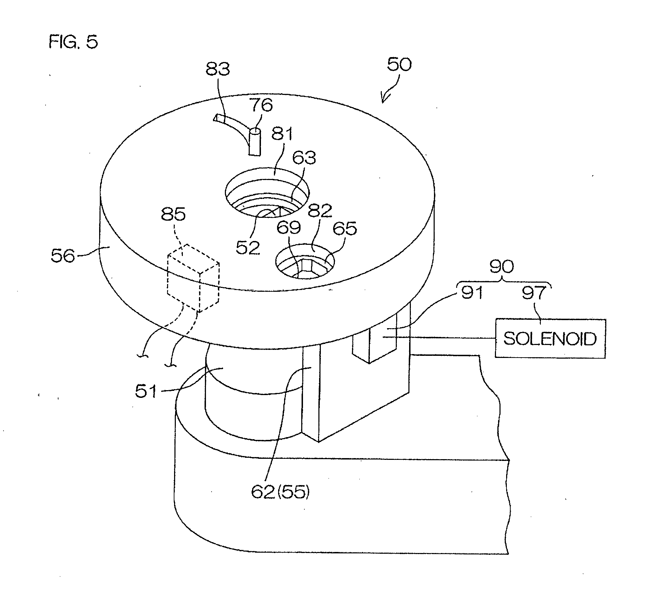

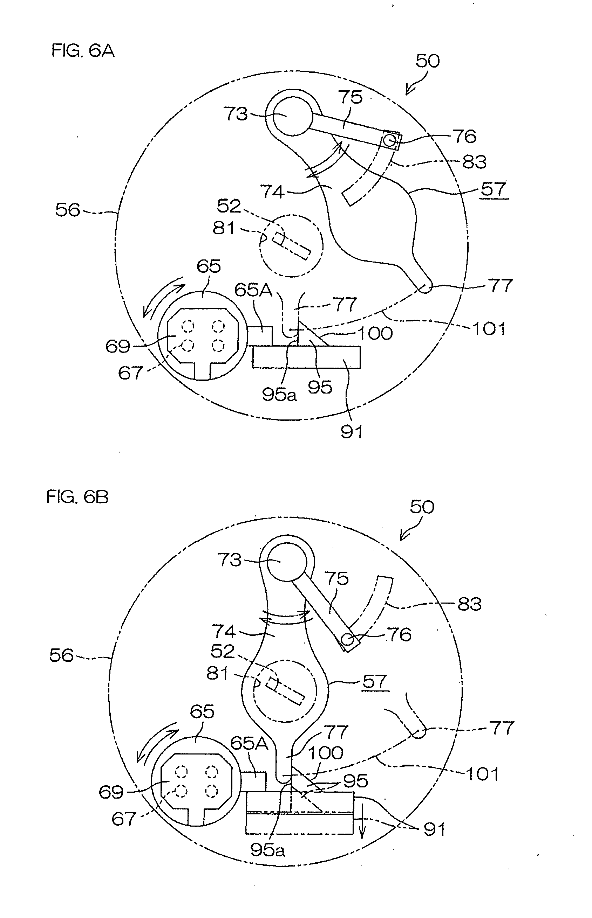

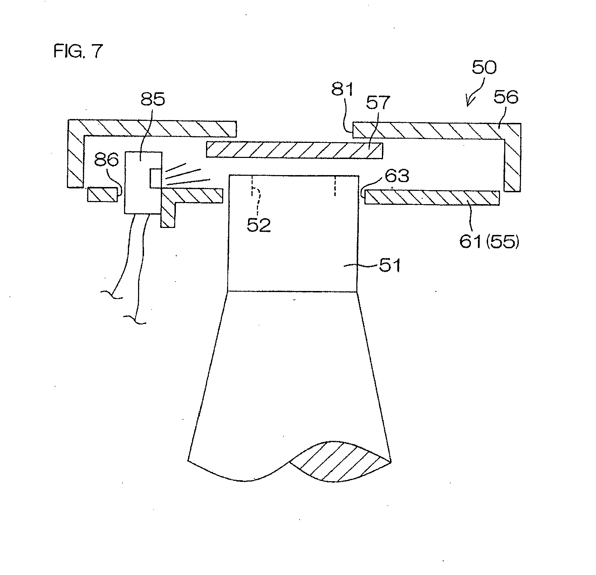

FIG. 5 is a perspective view of the key shutter device 50 and the key cylinder 51. Also, FIG. 6A and 6B are plan views of the key shutter device 50. Further, FIG. 7 is a sectional view of the key shutter device 50. The key cylinder 51 has a keyhole 52 into which the key 41 of the key unit 40 is inserted. The key shutter device 50 is fixed to the key cylinder 51 so as to protect the key hole 52. The key shutter device 50 includes a housing 55 fixed to the key cylinder 51, a cover 56 combined with the housing 55, and a key shutter 57 disposed between the housing 55 and the cover 56. The key cylinder 51 has a cylindrical head portion. In FIG. 6A and FIG. 6B, illustration of the housing 55 is omitted and the cover 56 is indicated by phantom lines.

The housing 55 includes a substantially disk-like upper surface portion 61 (see FIG. 7) and a side surface portion 62 (see FIG. 5) extending along the axial direction of the key cylinder 51 from an edge portion of the upper surface portion 61. A circular opening 63 (see FIG. 7), into which the head portion of the key cylinder 51 is inserted, is defined in the center of the upper surface portion 61.

A magnetic lock rotor 65 is rotatably coupled to a magnetic lock boss (not shown) provided on the housing 55. The magnetic lock boss has a plurality of recesses formed in its upper surface portion for respectively housing pairs of coil springs and cylindrical permanent magnets 67. The magnetic lock rotor 65 is formed to a cylindrical shape and a lower portion thereof is rotatably engaged with the magnetic lock boss. A recess portion 69 for insertion of the magnetic key 46 is formed in an upper portion of the magnetic lock rotor 65.

The housing 55 further has formed thereon a boss (not shown), which is for the key shutter 57 and projects towards the cover 56. The key shutter 57 is rotatably coupled to this boss. The key shutter 57 is disposed between the housing 55 and the cover 56 and is enabled to rotate in a horizontal direction around the boss between the housing 55 and the cover 56. More specifically, the key shutter 57 is rotatable between a closed position of being positioned above the key cylinder 51 and closing the key hole 52 (see FIG. 6B) and an open position of withdrawing from above the key cylinder 51 to open the key hole 52 and allow access to the key hole 52 (see FIG. 6A). The key shutter 57 is urged toward the open position by an unillustrated spring member.

As shown in FIG. 6A and FIG. 6B, the key shutter 57 includes a cylindrical shaft portion 73 that is rotatably coupled to the boss formed on the housing 55 and a shutter plate 74 extending parallel to the upper surface portion 61 of the housing 55 from the shaft portion 73. The key shutter 57 further includes a lever 75 extending parallel to the upper surface portion 61 of the housing 55 from the shaft portion 73 in a direction different from that of the shutter plate 74 and an operation knob 76 provided at the tip of the lever 75. The key shutter 57 can thus be rotated around the shaft portion 73 by operating the operation knob 76. The key shutter 57 can thereby be rotated from the open position shown in FIG. 6A to the closed position shown in FIG. 6B.

The cover 56 is formed to be substantially circular in a plan view and is coupled to the housing 55 in a state where the key shutter 57 is interposed between the cover 56 and the upper surface portion 61 of the housing 55. In the cover 56, a first opening 81 for exposing the key cylinder 51 is formed at a position aligned with the key cylinder 51. In the present preferred embodiment, the first opening 81 is formed at substantially the center of the cover 56. A second opening 82 for exposing the magnetic lock rotor 65 is formed at a side of the first opening 81. Further, an arcuate slot 83 exposing the operation knob 76 of the key shutter 57 is formed at a side of the first opening 81. The operation knob 76 can be displaced within the slot 83 and the key shutter 57 can thereby be rotated around the shaft portion 73 from the open position (see FIG. 6A) to the closed position (see FIG. 6B).

As shown in FIG. 7, when the key shutter 57 is at the closed position, the key shutter 57 is positioned between the key cylinder 51 and the first opening 81 to close the first opening 81 and prevent access to the key cylinder 51 from the exterior.

A key hole illuminating unit 85 that illuminates a vicinity of the upper surface of the key cylinder 51 is provided at a side of the key cylinder 51. The key hole illuminating unit 85 may include a light emitting diode as a light emitting element. The key hole illuminating unit 85 is disposed so as to penetrate through an opening 86 formed in the upper surface portion 61 of the housing 55 and is mounted on the upper surface portion 61 of the housing 55. The key hole illuminating unit 85 illuminates a space between the upper surface of the key cylinder 51 and the cover 56. When, the key shutter 57 is at the open position, a portion of the light emitted from the key hole illuminating unit 85 leaks out from the opening 81 of the cover 56 to a space at the outer side to help the user recognize the position of the key hole 52. The key hole illuminating unit 85 is thus an example of a light emitting unit that generates a light signal for making the position of the key hole 52 be recognized by the user.

As best shown in FIG. 5, a holding mechanism 90 is provided for holding the key shutter 57 at the closed position. The holding mechanism 90 includes a cam member 91 that is mounted on the side surface portion 62 of the housing 55. A solenoid 97 is coupled to the cam member 91. The cam member 91 is urged toward the key cylinder 51 by an unillustrated spring member. On the other hand, by energizing the solenoid 97, the cam member 91 can be displaced in a direction of separating from the key cylinder 51 against the spring force of the spring member. The solenoid 97 is an example of a shutter driving unit.

As best shown in FIG. 6A and FIG. 6B, a lock portion 77 that engages with a cam element 95 is provided at a tip of the shutter plate 74 of the key shutter 57. When the solenoid 97 is not energized, the cam element 95 is at a lock position (position indicated by solid lines in FIG. 6A and FIG. 6B) at which it is engageable with the lock portion 77. On the other hand, when the solenoid 97 is energized, the cam element 95 withdraws from the lock position and moves to an unlock position (position indicated by phantom lines in FIG. 6B) due to displacement of the cam member 91. At the unlock position, the cam element 95 does not engage with the lock portion 77.

The magnetic lock rotor 65 has, on its outer peripheral surface, a projection 65A projecting in a direction parallel to the upper surface portion 61 of the housing 55. That is, the projection 65A projects in a direction orthogonal to the rotation axis of the magnetic lock rotor 65. By rotating the magnetic lock rotor 65, the projection 65A can be made to contact the cam member 91 and the cam member 91 can further be swung in the direction of separating from the key cylinder 51. The cam element 95 can thereby be displaced from the lock position to the unlock position. The cam member 91 is spring-urged toward the key cylinder 51 and therefore when an external force is not applied to the magnetic lock rotor 65, the cam element 95 is at the lock position. That is, the cam element 95 can be displaced from the lock position to the unlock position by either energizing the solenoid 97 or engaging the magnetic key 46 with the magnetic lock rotor 65 to make the magnetic rotor 65 rotate.

In the present preferred embodiment, the cam element 95 has an inclined surface 100 as a cam surface on a front end surface (key cylinder 51 side) facing the shaft portion 73 of the key shutter 57. The inclined surface 100 is disposed so as to cross a movement path 101 (see FIG. 6A and FIG. 6B) of the lock portion 77 of the key shutter 57 when the cam element 95 is at the lock position. More specifically, when the key shutter 57 moves from the open position (FIG. 6A) to the closed position (FIG. 6B), the lock portion 77 moves through the arcuate movement path 101 centered around the shaft portion 73. In the movement process, the lock portion 77 contacts the inclined surface 100. That is, the inclined surface 100 is formed such that in regard to the direction of movement of the lock portion 77 when the key shutter 57 is displaced toward the closed position, the distance from the shaft portion 73 becomes shorter the further downstream in the movement direction.

When the key shutter 57 is rotated further toward the closed position from the state where the lock portion 77 contacts the inclined surface 100, the lock portion 77 moves along the inclined surface 100 and thereby pushes the cam element 95 to the outer side (direction of moving away from the key cylinder 51). The cam member 91 is thereby displaced in the direction of moving away from the key cylinder 51 and the cam element 95 withdraws from the lock position to the unlock position. When the lock portion 77 moves beyond the cam element 95 to the closed position, the engagement of the lock portion 77 and the inclined surface 100 is disengaged and the cam member 91 is displaced in the direction of approaching the key cylinder 51 again by the spring force of the spring member coupled to the cam member 91. A restricting surface 95a of the cam element 95 that is thereby returned to the lock position faces the lock portion 77 and engages with the lock portion 77. Return of the key shutter 57 to the open position is thereby restricted.

When the solenoid 97 is energized from this state, the cam element 95 is withdrawn from the movement path 101 of the lock portion 77 by the displacement of the cam member 91. The restriction of the lock portion 77 by the cam element 95 is thereby released and the key shutter 57 is rotated toward the open position by the spring force of the spring member coupled to the key shutter 57. The cam member 91 is also similarly displaced and the cam element 95 is withdrawn from the movement path 101 of the lock portion 77 by making the magnetic lock rotor 65 rotate instead of energizing the solenoid 97. The restriction of the lock portion 77 by the cam element 95 is thereby released and the key shutter 57 is rotated toward the open position in this case as well.

The key shutter device 50 is thus arranged such that it can be put in the closed state by manual rotational operation of the operation knob 76 by the user. The key shutter device 50 is also arranged so that it can be put in the open state by actuation of the solenoid 97 by remote operation by the key unit 40. The key shutter device 50 is arranged such that it can also be put in the open state manually by the user inserting the magnetic key 46 in the magnetic lock rotor 65 and performing a rotational operation.

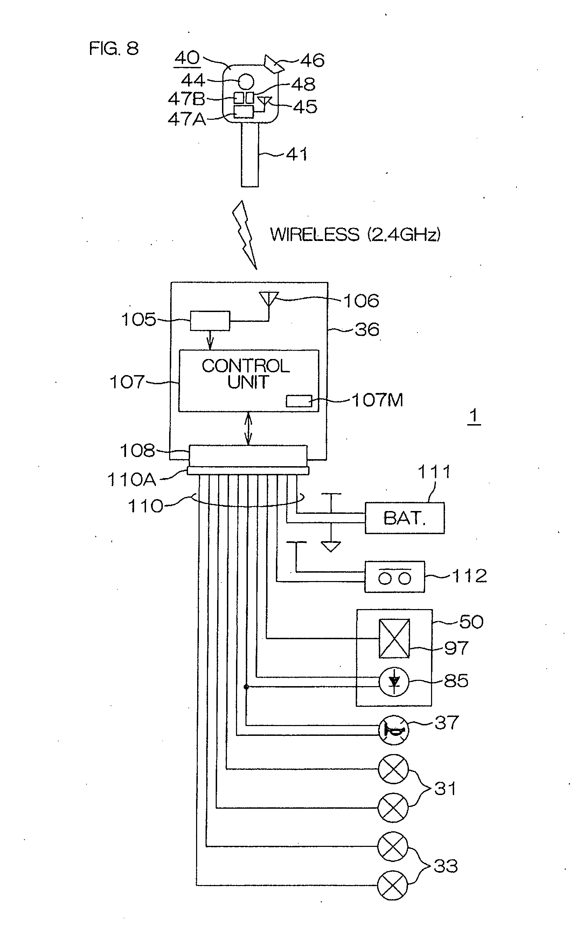

FIG. 8 is a block diagram for describing the electrical arrangement of a remote control key system installed in the motorcycle 1. The remote control key system includes the key unit 40, the remote control receiving unit 36, and the key shutter device 50. This remote control key system is an example of a remote control system for motor vehicle according to a preferred embodiment.

The key unit 40 includes the transmitter 47A, the identification code memory 47B, the antenna 45, and the battery 48. The transmitter 47A makes radio waves expressing the command signal be radiated from the antenna 45. The command signal includes an actuation command for making the answerback operation be performed and the identification code read from the identification code memory 47B.

The remote control receiving unit 36 includes a receiver 105, an antenna 106, and a control unit 107. The remote control receiving unit 36 includes a connector 108 for coupling a harness 110 that is routed inside the vehicle body of the motorcycle 1. A connector 110A to be coupled to the connector 108 is provided at one end of the harness 110. A plurality of electric wires (typically, coated wires) are coupled to the connector 110A. The harness 110 is connected to a battery 111 included in the vehicle body and a main switch 112 included inside the key cylinder 51. Further, the harness 110 is connected to actuators such as the key hole illuminating unit 85, the solenoid 97, the buzzer unit 37, the front flashers 31, the rear flashers 33, etc.

When radio waves expressing the command signal are generated from the antenna 45 of the key unit 50, the radio waves are received by the receiver 105 via the antenna 106. The receiver 105 provides the command signal to the control unit 107. In response thereto, the control unit 107 executes the authentication process on the identification code included in the command signal. If the authentication succeeds, the control unit 107 executes the answerback control for actuating the actuators. Specifically, the control unit 107 may make the front flashers 31 and the rear flashers 33 blink to generate a light signal that notifies the user of the confirmation of the receiving of the signal from the key unit 40 and also notifies the position of the motorcycle 1. Also, the control unit 107 may make the buzzer unit 37 sound to generate a sound signal that notifies the user of the confirmation of the receiving of the signal from the key unit 40 and also notifies the position of the motorcycle 1. Also, the control unit 107 may actuate the solenoid 97 to release the restriction of the key shutter 57 by the cam member 97 and makes the key shutter 57 move to the open position. Yet further, the control unit 107 may energize the key hole illuminating unit 85 to illuminate the key hole 52 of the key cylinder 51. As mentioned above, the light from the key hole illuminating unit 85 leaks outside from the opening 81 of the cover 56 so that the user can thereby recognize the position of the key hole 52.

The control unit 107 has a registration memory 107M in which the identification code of the key unit 40 is registered in advance. The authentication of the identification code is a judgment of whether or not an identification code that matches the identification code included in the received command signal is registered in the registration memory 107M. That is, the authentication succeeds if an identification code that matches the identification code in the received command signal is registered in the registration memory 107M or else the authentication fails. The control unit 107 has a plurality of control modes. The plurality of control modes includes an ordinary mode in which such an authentication process is executed in response to the command signal and a registration mode for registering an identification code into the registration memory 107M.

The transmitter 47A included in the key unit 40 may be arranged to generate a command signal that includes a first answerback command as the actuation command when the operation of the operation button 44 is a short pressing operation of within a predetermined time. Also, the transmitter 47A may be arranged to generate a command signal that includes a second answerback command as the actuation command when the operation of the operation button 44 is a long pressing operation that exceeds the predetermined time. With either of the first answerback command and the second answerback command, the transmitter 47A generates the command signal with the identification code being added to the command.

The control unit 107 of the remote control receiving unit 36 may be arranged to actuate the front flashers 31 and the rear flashers 33 and further make the buzzer unit 37 sound in response to the first answerback command when the authentication succeeds in the ordinary mode. That is, the remote control receiving unit 36 may be arranged to execute a vehicle position notifying operation of notifying the position of the motorcycle 1 to the user who may be far away from the motorcycle 1 in response to the first answerback command. Meanwhile, the control unit 107 may be arranged to execute, in addition to the vehicle position notifying operation, a control operation of energizing the solenoid 97 and energizing the key hole illuminating unit 85 in response to the second answerback command when the authentication succeeds in the ordinary mode. That is, the control unit 107 may be arranged to execute, in addition to the vehicle position notifying operation, a key hole access allowing operation of allowing access to the key hole 52 and making the user recognize the position of the key hole 52 in response to the second answerback command. When authentication fails in the ordinary mode, the control unit 107 does not respond to either of the first answerback command and the second answerback command.

When looking for the motorcycle 1 in a bicycle parking lot, the user performs the short pressing operation or the long pressing operation of the operation button 44 of the key unit 40. The front flashers 31 and the rear flashers 33 are thereby actuated and the buzzer unit 37 sounds so that the user can readily know the position of his/her vehicle. Upon arriving at or immediately before arriving at the motorcycle 1, the user performs the long pressing operation of the operation button 44 of the key unit 40. The key shutter 57 is thereby opened and the key hole 52 is illuminated. The user can thus readily access the key hole 52 and start the motorcycle 1 immediately.

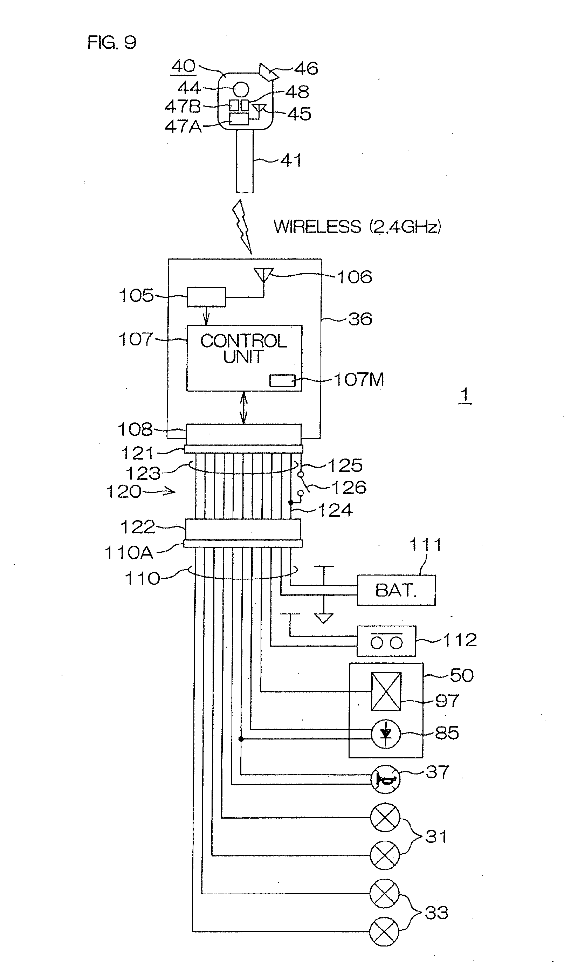

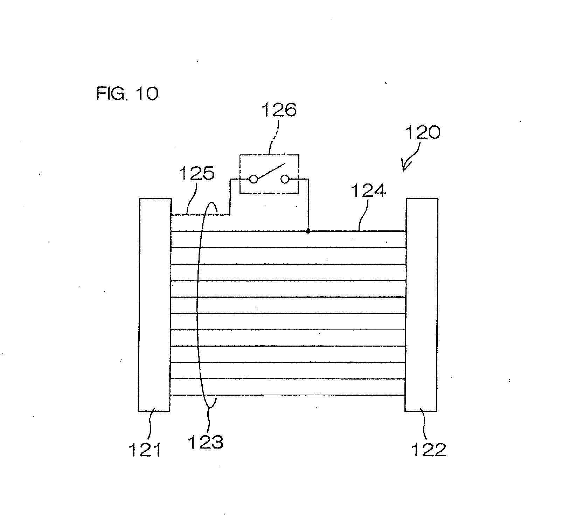

FIG. 9 is a conceptual diagram for describing the arrangement of the motorcycle 1 when the key unit 40 is registered into the remote control receiving unit 36. Also, FIG. 10 is a schematic arrangement diagram for describing the arrangement of a registration-dedicated harness 120 used in registering the key unit 40.

The key unit 40 is registered in the remote control receiving unit 36 by making the identification code unique to the key unit 40 be stored into the registration memory 107M included in the remote control receiving unit 36. The identification code unique to the key unit 40 is secured in the identification code memory 47B included in the key unit 40. As mentioned above, when transmitting the command signal, the transmitter 47A of the key unit 40 reads the identification code from the identification code memory 47B and makes the identification code be included in the command signal.

The process of registering the identification code of the key unit 40 into the remote control receiving unit 36 is typically performed by a worker at a dealer, etc. In the registration process, the registration-dedicated harness 120 is used. Specifically, the registration-dedicated harness 120 is interposed between the remote control receiving unit 36 and the harness 110.

The registration-dedicated harness 120 includes a first connector 121 for connection to the remote control receiving unit 36, a second connector 122 for connection to the harness 110, and a plurality of electric wires 123 (typically, coated wires) routed between the first connector 121 and the second connector 122. The first connector 121 is connected to the connector 108 of the remote control receiving unit 36 and the second connector 122 is connected to the connector 110A of the harness 110.

The plurality of electric wires 123 are arranged to respectively connect the electric wires of the harness 110 to the corresponding terminals included in the connector 108 of the remote control receiving unit 36. The electric wires 123 include a battery line 124 connected to the battery 111 via the connector 110A of the harness 110. The battery line 124 connects the battery 111 to a battery terminal included in the connector 108 of the remote control receiving unit 36. The electric wires 123 further include a registration command signal line 125 for supplying a registration mode transition command signal to the remote control receiving unit 36. In the present preferred embodiment, the registration command signal line 125 is connected only to the remote control receiving unit 36 and is not connected to the harness 110.

The registration-dedicated harness 120 further includes a switch unit 126 interposed between the battery line 124 and the registration command signal line 125. The switch unit 126 is a manual switch that is made to conduct or is interrupted by an operator and is a normally-open switch that is ordinarily in the open state when it is not operated. Therefore, when the operator operates the switch unit 126 and makes it conduct in the state where the registration-dedicated harness 120 is interposed between the remote control receiving unit 36 and the harness 110, the electric potential at the registration command signal line 125 is set at a battery potential, which is an example of a predetermined potential. This is supplied as the registration mode transition command signal to the remote control receiving unit 36 via the registration command signal line 125. In response thereto, the control unit 107 of the remote control receiving unit 36 makes its control mode transition from the ordinary mode to the registration mode.

When the command signal from the key unit 40 is received in the registration mode, the remote control receiving unit 36 stores the identification code included in the command signal in the registration memory 107M. The identification code of the key unit 40 can thereby be registered. When a predetermined number of identification codes are stored in the registration memory 107M or when a predetermined time (for example, 20 seconds) has elapsed from the transition to the registration mode, the control unit 107 makes the control mode transition from the registration mode to the ordinary mode.

When the registration of the key unit 40 is ended, the operator removes the registration-dedicated harness 120 and connects the connector 110A of the harness 110 to the connector 108 of the remote control receiving unit 36 to set up the ordinary connection state (see FIG. 8).

The registration-dedicated harness 120 is kept by one who mainly performs maintenance work on the motorcycle 1, that is, it is typically kept by a dealer and is not intended to be kept by a general user.

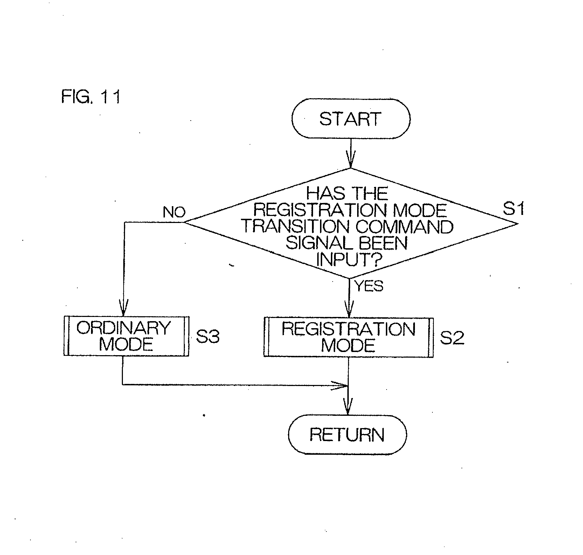

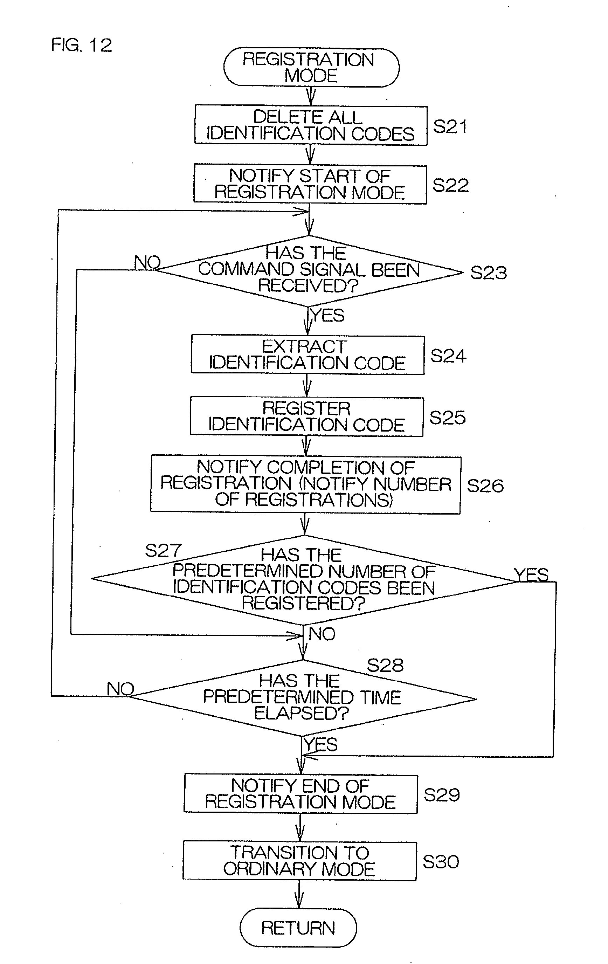

FIG. 11 and FIG. 12 are flowcharts for describing the operation of the control unit 107 included in the remote control receiving unit 36. As shown in FIG. 11, the control unit 107 references the input from the registration command signal line 125 to monitor whether or not the registration mode transition command signal is provided (step S1). When the registration mode transition command signal is provided, the control unit 107 executes the operation that is in accordance with the registration mode (step S2). If the registration mode transition command signal is not provided, the operation that is in accordance with the ordinary mode is executed (step S3).

As shown in FIG. 12, in the registration mode, the control unit 107 first deletes all identification codes stored in the registration memory 107M (step S21). The control unit 107 then makes either or both of the front flashers 31 and the rear flashers 33 blink to notify the operator that the registration mode has been entered (S22). In place of this operation or in addition to this operation, the control unit 107 may actuate the key hole illuminating unit 85 to perform notification to the operator. The transition to the registration mode may further be notified by the sounding of the buzzer unit 37. One or two or more of the front flashers 31, rear flashers 33, key hole illuminating unit 85, and buzzer unit 37 may be an example of a notification unit that notifies the operator that the transition to the registration mode has been performed.

Upon entering the registration mode, the control unit 107 standbys for the receiving of the command signal from the key unit 40 (step S23). Upon receiving the command signal from the key unit 40, the control unit 107 extracts the identification code included in the received command signal (step S24). The extracted identification code is then stored in the registration memory 107M to register the identification code (step S25). The key unit 40 that transmitted the command signal is thereby registered in association with the remote control receiving unit 36.

Each time an identification code is registered into the registration memory 107M, the control unit 107 executes a registration completion notification (step S26). The registration completion notification may, for example, be the blinking of the front flashers 31 and the rear flashers 33. The control unit 107, for example, makes the front flashers 31 and the rear flashers 33 blink the number of times that is in accordance with the number of identification codes that have been registered into the registration memory 107M. In place of this operation or in addition to this operation, the control unit 107 may make the key hole illuminating unit 85 blink the number of times that is in accordance with the number of identification codes that have been registered into the registration memory 107M. Further, the registration completion notification and the number of registered identification codes may be notified to the operator by the sounding and the number of times of sounding of the buzzer unit 37.

The control unit 107 then judges whether or not the number of identification codes registered into the registration memory 107M has reached a predetermined number (step S27). When the predetermined number (for example, four) of identification codes have been registered into the registration memory 107M, the control unit 107 performs the registration mode end notification (step S29) and makes the control mode transition from the registration mode to the ordinary mode (step S30). If the predetermined number of identification codes have not yet been registered, the control unit 107 judges whether or not the elapsed time from entry into the registration mode has reached a predetermined time (for example, 20 seconds) (step S28). If the elapsed time from entry into the registration mode has reached the predetermined time, the control unit 107 performs the registration mode end notification (step S29) and transitions to the ordinary mode (step S30). If the predetermined time has not yet elapsed, the control unit 107 continues with the standby for the receiving of the command signal (step S23).

If the command signal is not received (step S23: NO), the control unit 107 checks the elapsed time from entry into the registration mode (step S28). Then after the elapse of the predetermined time, the registration mode end notification is performed (step S29) and the transition to the ordinary mode is performed (step S30).

The registration mode end notification (step S28) may be the blinking of the front flashers 31 and the rear flashers 33. In place of or in addition to the blinking operation of the front flashers 31 and the rear flashers 33, blinking operation of the key hole illuminating unit 85 may be performed. The registration mode end notification may also be performed by the sounding of the buzzer unit 37.

As described above, with the motorcycle 1 according to the present preferred embodiment, the remote control receiving unit 36 is connected via the harness 110 to the battery 111, the main switch 112, the key shutter device 50, the buzzer unit 37, the front flashers 31, and the rear flashers 33 included in the vehicle body. By connecting the registration-dedicated harness 120 between the harness 110 and the remote control receiving unit 36 and making the switch unit 126 conduct, the remote control receiving unit 36 can be made to transition to the registration mode. By making the command signal, including the identification code, be generated from the key unit 40 in the state where the remote control receiving unit 36 has transitioned to the registration mode, the identification code can be registered into the registration memory 107M. The remote control receiving unit 36 can thus be made to transition to the registration mode using the registration-dedicated harness 120 that is not used ordinarily, and therefore the problem of the identification code of the key unit 40 being registered inadvertently into the registration memory 107M due to an operation by a general user does not occur. Moreover, the remote control receiving unit 36 can be made to transition to the registration mode by a simple process of connecting the registration-dedicated harness 120, and therefore the work load of a worker who registers the identification code of the key unit 40 is low and the possibility of operation error is also reduced. The identification code can thus be registered by a simple operation. A remote control unit registration method that enables the identification code to be registered by a simple operation while avoiding inadvertent registration of the identification code can thus be provided.

The key unit 40 does not have a receiving function and mainly has a transmitting function. A procedure of confirming the registration of the identification code by communication between the key unit 40 and the remote control receiving unit 36 thus cannot be adopted. Regardless of this, the key unit 40 can be registered reliably into the remote control receiving unit 36 with the arrangement of the present preferred embodiment. That is, with the present preferred embodiment, the remote control receiving unit 36 can be made to transition to the registration mode reliably by connection of the registration-dedicated harness 120. The worker can thus reliably recognize the state in which the remote control receiving unit 36 is actuating in the registration mode. Therefore, even if the key unit 40 does not have a receiving function, the key unit 40 can be registered reliably by a simple operation.

Also with the present preferred embodiment, the registration command signal line 125 can be connected to the battery line 124 to set the registration command signal line 125 at the battery potential by making the switch unit 126, included in the registration-dedicated harness 120, conduct. The registration mode transition command signal (battery potential) can thereby be input into the remote control receiving unit 36 via the registration command signal line 125. The remote control receiving unit 36 can thus be made to transition to the registration mode by performing the operation of making the switch unit 126 conduct. The operator can thus accurately ascertain the timing at which the remote control receiving unit 36 transitions to the registration mode. Therefore, the process of connecting the registration-dedicated harness 120 may be performed in advance and the remote control receiving unit 36 may be made to transition to the registration mode by operating the switch unit 126 when the preparation of the key unit 40 for which the identification code is to be registered is completed. The key unit 40 can thereby be registered smoothly within the predetermined time limit (see step S28 of FIG. 12).

Also with the present preferred embodiment, when the remote control receiving unit 36 is in the registration mode, the identification codes of a plurality of key units 40 can be registered into the registration memory 107M. The plurality of key units 40 can thereby be associated with a single remote control receiving unit 36. Also, the plurality of key units 40 can be registered smoothly because the registrations of the identification codes from the plurality of key units 40 are accepted in the registration mode.

Also with the present preferred embodiment, the registration mode is ended automatically when the predetermined number of identification codes are registered into the registration memory 107M. The number of registrable identification codes is thereby restricted to the predetermined number and the registration mode is ended automatically, and identification codes beyond those which are necessary are thereby prevented from being registered inadvertently and the security property can be improved. Also, when the predetermined number of identification codes have been registered, the registration mode is ended without requiring an operation and the registration process of the key units 40 can thus be simplified.

Also with the present preferred embodiment, the duration of the registration mode is restricted to the predetermined time, and therefore identification codes beyond those which are necessary are prevented from being registered inadvertently and the security property can be improved. Also, the registration mode is ended without requiring an operation by the worker and the remote control unit registration process can thus be simplified.

Further with the present preferred embodiment, the start and end of the registration mode are notified to the operator by the flashers 31 and 33, etc., at the point of transition to the registration mode and at the end of the registration mode. The identification code of the key unit 40 can thereby be registered reliably and registration of identification codes beyond those which are necessary can be avoided. The registration process of the key unit 40 can thus be performed smoothly.

Further with the present preferred embodiment, when an identification code is registered into the registration memory 107M, the completion of registration is notified to the operator by the flashers 31 and 33, etc. The operator can thereby confirm the registration of the identification code and can thus perform the identification code registration reliably. The registration process of the key unit 40 can thus be performed smoothly.

Yet further with the present preferred embodiment, the number of registered identification codes is notified to the operator by the flashers 31 and 33, etc. The operator can thereby confirm the number of registered identification codes in addition to the fact that the identification codes have been registered. The identification codes can thereby be registered reliably and registration of unnecessary identification codes can be avoided. The registration process of the key unit 40 can thus be performed smoothly.

Although a preferred embodiment has been described above, the present teaching may be carried out in yet other modes as well. For example, although with the preferred embodiment described above, a scooter type motorcycle is taken up as an example, the motorcycle to which the present teaching is applicable is not restricted to a scooter type motorcycle and may be any of a moped type, off-road type, on-road type, etc. Although a motorcycle typically has two wheels, it may have three or more wheels. Further besides a motorcycle, the present teaching may be applied to a saddle type vehicle of another mode, such as an ATV (all-terrain vehicle), PWV (personal water vehicle), snowmobile, etc., or to a sit-in type vehicle, such as an SSV (side-by-side vehicle) or a golf cart. A saddle type vehicle refers to a motor vehicle of a mode with which a rider rides in a straddling manner. A sit-in type vehicle is a vehicle having a roof or a door but does not have a window that can be closed and does not have a closed compartment. Further, the present teaching is not restricted to a compact vehicle (vehicle without a closable compartment), such as a saddle type vehicle or a sit-in type vehicle, and may also be applied to a vehicle of other modes as represented by four-wheeled automobiles having a compartment that defines a closed space.

Also, although with the preferred embodiment, the motorcycle 1 having the engine 6 as the drive source is taken up as an example, the present teaching may be applied to motor vehicles having other forms of drive sources. Examples of other forms of drive sources include hybrid type drive sources that make combined use of an engine and an electric motor, and electromotive type drive sources that mainly use an electric motor.

Further, although with the preferred embodiment, the key unit 40, which is a remote control unit that is integrated with the key 41, is described, the key for the motor vehicle and the remote control unit may be separate entities.

Also, although with the preferred embodiment, an example where the first connector 121 of the registration-dedicated harness 120 is connected to the connector 108 of the remote control receiving unit 36 was described, the first connector 121 may further be connected to the connector 108 of the remote control receiving unit 36 via yet another harness.

Further, although with the preferred embodiment, the signal of the battery potential is used as the registration mode transition command signal, a signal of another potential (for example, the ground potential) may be used as the registration mode transition command signal instead.

Further, with the preferred embodiment, the remote control receiving unit automatically transitions to the ordinary mode from the registration mode after registration of the predetermined number of identification codes or after elapse of the predetermined time after transition to the registration mode was described. However, for example, the transition from the registration mode to the ordinary mode may be performed by making the switch unit 126 conduct a second time, or the registration-dedicated harness may be provided with a dedicated switch unit for commanding the transition from the registration mode to the ordinary mode.

Also, although with the preferred embodiment, the switch unit 126 is included in the registration-dedicated harness 120, the switch unit 126 may be omitted. That is, arrangements may be made such that the control mode of the remote control receiving unit 36 transitions to the registration mode by connection of the registration-dedicated harness 120 to the remote control receiving unit 36 and without requiring a separate operation.

## Claims

1. A method for registering a remote control unit (40) into a remote control receiving unit (36) connected via a harness (110) to a device (50) installed in a vehicle body (2), the method comprising:
a step of connecting a registration-dedicated harness (120) between the harness (110) and the remote control receiving unit (36) and making the remote control receiving unit (36) transition to a registration mode; and
a step of making an identification code be generated from the remote control unit (40) and making the identification code be received by the remote control receiving unit (36) in the registration mode to register the identification code, received by the remote control receiving unit (36), into a registration memory (107M).

2. A method for registering a remote control unit (40) into a remote control receiving unit (36) according to claim 1, wherein the registration-dedicated harness (120) includes a registration command signal line (125) for inputting a registration mode transition command signal into the remote control receiving unit (36), a predetermined voltage level line (125), and a switch (126) connecting the predetermined voltage level line (124) to the registration command signal line (125), and
the step of making the remote control receiving unit (36) transition to the registration mode includes a step of making the switch (126) conduct.

3. A method for registering a remote control unit (40) into a remote control receiving unit (36) according to claim 1 or 2, wherein the step of registering the identification code into the registration memory (107M) includes a step of making identification codes be generated successively from a plurality of remote control units (40) when the remote control receiving unit (36) is in the registration mode to successively register the plurality of identification codes into the registration memory (107M).

4. A method for registering a remote control unit (40) into a remote control receiving unit (36) according to claim 3, further comprising a step in which the remote control receiving unit (36) automatically ends the registration mode when a predetermined number of identification codes are registered into the registration memory (107M).

5. A method for registering a remote control unit (40) into a remote control receiving unit (36) according to any one of claims 1 to 4, further comprising a step in which the remote control receiving unit (36) automatically ends the registration mode when a predetermined time elapses from the transition to the registration mode.

6. A method for registering a remote control unit (40) into a remote control receiving unit (36) according to any one of claims 1 to 5, wherein the remote control receiving unit (36) is connected to a notification unit (31, 33, 37, 85),
the method further comprising a step in which the remote control receiving unit (36) actuates the notification unit (31, 33, 37, 85) when the transition to the registration mode is performed and when the registration mode is ended.

7. A method for registering a remote control unit (40) into a remote control receiving unit (36) according to claim 6, wherein when an identification code is registered into the registration memory (107M), the remote control receiving unit (36) actuates the notification unit (31, 33, 37, 85).

8. A method for registering a remote control unit (40) into a remote control receiving unit (36) according to claim 7, wherein a plurality of identification codes are registrable into the registration memory (107M), and when a new identification code is registered into the registration memory (107M), the remote control receiving unit (36) actuates the notification unit (31, 33, 37, 85) to express the number of identification codes registered into the registration memory (107M).

9. A remote control system (40, 36, 50) for motor vehicle, comprising:
a harness (110) connected to a device (50) installed in a vehicle body (2);
a remote control receiving unit (36) disposed in the vehicle body (2), having a registration memory (107M) registering an identification code of a remote control unit (40), for receiving and accepting a command signal, including an identification code registered in the registration memory (107M), from the remote control unit (40); **characterised by**
a registration-dedicated harness (120) interposed between the harness (110) and the remote control receiving unit (36), connecting the harness (10) and the remote control receiving unit (36), for making the remote control receiving unit (36) transition to a registration mode for registering an identification code, generated by the remote control unit (40), into the registration memory (107M).

10. A remote control system (40, 36, 50) for motor vehicle according to claim 9, wherein the registration-dedicated harness (120) includes a registration command signal line (125) for inputting a registration mode transition command signal into the remote control receiving unit (36), a predetermined voltage level line (124), and a switch (126) connecting the predetermined voltage level line (124) to the registration command signal line (125).

11. A remote control system (40, 36, 50) for motor vehicle according to claim 9 or 10, wherein the remote control receiving unit (36) is configured to accept and register a plurality of identification codes successively into the registration memory (107M) in the registration mode.

12. A remote control system (40, 36, 50) for motor vehicle according to claim 11, wherein the remote control receiving unit (36) is configured to automatically end the registration mode when a predetermined number of identification codes are registered into the registration memory (107M).

13. A remote control system (40, 36, 50) for motor vehicle according to any one of claims 9 to 12, wherein the remote control receiving unit (36) is configured to automatically end the registration mode when a predetermined time elapses from the transition to the registration mode.

14. A remote control system (40, 36, 50) for motor vehicle according to any one of claims 9 to 13, wherein the remote control receiving unit (36) is configured to be connectable to a notification unit (31, 33, 37, 85) disposed in the vehicle body, and the remote control receiving unit (36) is arranged to actuate the notification unit (31, 33, 37, 85) when transitioning to the registration mode and when ending the registration mode.

15. A remote control system (40, 36, 50) for motor vehicle according to claim 14, wherein the remote control receiving unit (36) actuates the notification unit (31, 33, 37, 85) when an identification code is registered into the registration memory (107M).

16. A remote control system (40, 36, 50) for motor vehicle according to claim 15, wherein a plurality of identification codes are registrable into the registration memory (107M), and
the remote control receiving unit (36) is configured to actuate the notification unit (31, 33, 37, 85) to express the number of identification codes registered into the registration memory (107M) when a new identification code is registered into the registration memory (107M).

17. A remote control system (40, 36, 50) for motor vehicle according to any one of claims 9 to 16, further comprising a remote control unit (40) for generating a command signal that includes an identification code.

18. A motor vehicle (1) comprising:
a vehicle body (2) in which the harness (110), the remote control receiving unit (36), and the registration-dedicated harness (120) are disposed;
a wheel (14, 15) mounted to the vehicle body (2); and
a remote control system (40, 36, 50) according to any one of claims 9 to 17.

## Patentansprüche

1. Ein Verfahren zur Registrierung einer Fernsteuer-Einheit (40) in eine Fernsteuer-Aufnahme-Einheit (36), verbunden über einen Kabelstrang (101) mit einer Vorrichtung (50) installiert in einen Fahrzeugkörper (2), das Verfahren umfasst:
einen Schritt von Verbinden eines registrierungs-zugeordneten Kabelstrangs (12) zwischen dem Kabelstrang (110) und der Fernsteuer-Aufnahme-Einheit (36) und Ausführen, dass die Fernsteuer-Aufnahme-Einheit (36) einen Wechsel zu einem Registrierungs-Modus ausführt; und
einen Schritt der Ausführung, dass ein Identifikations-Code von der Fernsteuer-Einheit (40) erzeugt wird und Ausführen, dass der Identifikations-Code durch die Fernsteuer-Aufnahme-Einheit (36) in dem Registrierungs-Modus aufgenommen wird, um den Identifikations-Code zu registrieren, der durch die Fernsteuer-Aufnahme-Einheit (36) aufgenommen ist, in einen Registrierungs-Speicher (107M).

2. Ein Verfahren zur Registrierung einer Fernsteuer-Einheit (40) in eine Fernsteuer-Aufnahme-Einheit (36) gemäß Anspruch 1, wobei der registrierungs-zugeordnete Kabelstrang (120) beinhaltet, eine Registrierungs-Befehl-Signalleitung (125) zum Eingeben eines Registrierungs-Modus-Wechsel-Befehl-Signals in die Fernsteuer-Aufnahme-Einheit (36), eine vorgegebene Spannungs-Wert-Leitung (125) und einen Schalter (126), verbunden mit der vorgegebenen Spannungs-Wert-Leitung (124) zu der Registrierungs-Befehl-Signalleitung (125), und den Schritt der Ausführung, dass der Wechsel der Fernsteuer-Aufnahme-Einheit (36) zu dem Registrierungs-Modus einen Schritt enthält, der Ausführung den Schalter (126) leitend zu machen.

3. Ein Verfahren zur Registrierung einer Fernsteuer-Einheit (40) in einer Fernsteuer-Aufnahme-Einheit (36) gemäß Anspruch 1 oder 2, wobei der Schritt der Registrierung des Identifikations-Code in dem Registrierungs-Speicher (170M) beinhaltet einen Schritt der Ausführung, dass Identifikations-Code aufeinanderfolgend von einer Mehrzahl von Fernsteuer-Einheiten (40) erzeugt werden, wenn die Fernsteuer-Aufnahme-Einheit (36) in dem Registrierungs-Modus ist, um aufeinanderfolgend die Mehrzahl von Identifikations-Code in den Registrierungs-Speicher (107M) zu registrieren.

4. Ein Verfahren zur Registrierung einer Fernsteuer-Einheit (40) in einer Fernsteuer-Aufnahme-Einheit (36) gemäß Anspruch 3, das weiterhin umfasst, einen Schritt indem die Fernsteuer-Aufnahme-Einheit (36) den Registrierungs-Modus automatisch beendet, wenn eine vorgegebene Anzahl von Identifikations-Code in dem Registrierungs-Speicher (107M) registriert ist.

5. Ein Verfahren zur Registrierung einer Fernsteuer-Einheit (40) in einer Fernsteuer-Aufnahme-Einheit (36) gemäß irgendeinem der Ansprüche 1 bis 4, das weiterhin umfasst, einen Schritt, indem die Fernsteuer-Aufnahme-Einheit (36) den Registrierungs-Modus automatisch beendet, wenn eine vorgegebene Zeit von dem Wechsel zu dem Registrierungs-Modus verstrichen ist.

6. Ein Verfahren zur Registrierung einer Fernsteuer-Einheit (40) in einer Fernsteuer-Aufnahme-Einheit (36) gemäß irgendeinem der Ansprüche 1 bis 5, wobei die Fernsteuer-Aufnahme-Einheit (36) mit einer Melde-Einheit (31, 33, 37, 85) verbunden ist, das Verfahren umfasst weiterhin einen Schritt, indem die Fernsteuer-Aufnahme-Einheit (36) die Melde-Einheit (31, 33, 37, 85) betätigt, wenn der Wechsel zu dem Registrierungs-Modus durchgeführt ist und wenn der Registrierungs-Modus beendet ist.

7. Ein Verfahren zur Registrierung einer Fernsteuer-Einheit (40) in einer Fernsteuer-Aufnahme-Einheit (36) gemäß Anspruch 6, wobei, wenn ein Identifikätions-Code in den Registrierungs-Speicher (107M) registriert ist, die Fernsteuer-Aufnahme-Einheit (36) die Melde-Einheit (31, 33, 37, 85) betätigt.

8. Ein Verfahren zur Registrierung einer Fernsteuer-Einheit (40) in einer Fernsteuer-Aufnahme-Einheit (36) gemäß Anspruch 7, wobei eine Mehrzahl von Identifikations-Code in dem Registrierungs-Speicher (107M) registrierbar sind, und wenn ein neuer Identifikations-Code in dem Registrierungs-Speicher (107M) registriert ist, die Fernsteuer-Aufnahme-Einheit (36) die Melde-Einheit (31, 33, 37, 85) betätigt, um die Anzahl der Identifikations-Code, registriert in dem Registrierungs-Speicher (107M), wiederzugeben.

9. Ein Fernsteuer-System (40, 36, 50) für ein Motorfahrzeug mit:
einem Kabelstrang (110) verbunden mit einer Vorrichtung (50), installiert in einem Fahrzeugkörper (2);
einer Fernsteuer-Aufnahme-Einheit (36), angeordnet in dem Fahrzeugkörper (2), die einen Registrierungs-Speicher (107M) hat, der einen Identifikations-Code von einer Fernsteuer-Einheit (40), registriert zum Aufnehmen und Annehmen eines Befehlsignals beinhaltend,
einen Identifikations-Code registriert in dem Registrierungs-Speicher (107M) von der Fernsteuer-Einheit (40) **gekennzeichnet durch** einen registrierungs-zugeordneten Kabelstrang (120) angeordnet zwischen dem Kabelstrang (110) und der Fernsteuer-Aufnahme-Einheit (36) zum Verbinden des Kabelstrangs (10) und der Fernsteuer-Aufnahme-Einheit (36), zum Ausführen, dass die Fernsteuer-Aufnahme-Einheit (36) zu einem Registrierungs-Modus wechselt zum Registrieren eines Identifikations-Code, erzeugt durch die Fernsteuer-Einheit (40), in den Registrierungs-Speicher (107M).

10. Ein Fernsteuer-System (40. 36, 50) für ein Motorfahrzeug gemäß Anspruch 9, wobei der registrierungs-zugeordnete Kabelstrang (120) beinhaltet, eine Registrierungs-Befehl-Signalleitung (125) zum Eingeben eines Registrierungs-Modus-Wechsel-Befehl-Signals in die Fernsteuer-Aufnahme-Einheit (36), eine vorgegebene Spannungs-Wert-Leitung (124) und einen Schalter (126), der die vorgegebene Spannungs-Wert-Leitung (124) mit der Registrierungs-Befehl-Signalleitung (125) verbindet.

11. Ein Fernsteuer-System (40, 36, 50) für ein Motorfahrzeug gemäß Anspruch 9 oder 10, wobei die Fernsteuer-Aufnahme-Einheit (36) konfiguriert ist, um einen Mehrzahl von ldentifikations-Code aufeinanderfolgend in dem Registrierungs-Speicher (107M) in dem Registrierungs-Modus anzunehmen und zu registrieren.

12. Ein Fernsteuer-System (40, 36, 50) für ein Motorfahrzeug gemäß Anspruch 11, wobei die Fernsteuer-Aufnahme-Einheit (36) konfiguriert ist, um den Registrierungs-Modus automatisch zu beenden, wenn eine vorgegebene Anzahl von Identifikations-Code in dem Registrierungs-Speicher (107M) registriert ist.

13. Ein Fernsteuer-System (40, 36, 50) für ein Motorfahrzeug gemäß irgendeinem der Ansprüche 9 bis 12, wobei die Fernsteuer-Aufnahme-Einheit (36) konfiguriert ist, um automatisch den Registrierungs-Modus zu beenden, wenn eine vorgegebene Zeit von dem Wechsel zu dem Registrierungs-Modus verstrichen ist.

14. Ein Fernsteuer-System (40, 36, 50) für ein Motorfahrzeug gemäß irgendeinem der Ansprüche 9 bis 13, wobei die Fernsteuer-Aufnahme-Einheit (36) konfiguriert ist, um mit einer Melde-Einheit (31, 33, 37, 85), angeordnet in dem Fahrzeugkörper, verbindbar zu sein, und die Fernsteuer-Aufnahme-Einheit (36) angeordnet ist, die Melde-Einheit (31, 33, 37, 85) zu betätigen beim Wechsel zu dem Registrierungs-Modus und wenn der Registrierungs-Modus endet.

15. Ein Fernsteuer-System (40, 36, 50) für ein Motorfahrzeug gemäß Anspruch 14, wobei die Fernsteuer-Aufnahme-Einheit (36) die Melde-Einheit (31, 33, 37, 35, 85) betätigt, wenn ein Identifikations-Code in dem Registrierungs-Speicher (107M) registriert ist.

16. Ein Fernsteuer-System (40, 36, 50) für ein Motorfahrzeug gemäß Anspruch 15, wobei eine Mehrzahl von Identifikations-Code in dem Registrierungs-Speicher (107M) registrierbar sind, und die Fernsteuer-Aufnahme-Einheit (36) konfiguriert ist, um die Melde-Einheit (31, 33, 37, 85) zu betätigen, um die Anzahl von Identifikations-Code, registriert in dem Registrierungs-Speicher (107M) wiederzugeben, wenn ein neuer Identifikations-Code in dem Registrierungs-Speicher (107M) registriert ist.

17. Ein Fernsteuer-System (40, 36, 50) für ein Motorfahrzeug gemäß irgendeinem der Ansprüche 9 bis 15, das weiterhin umfasst, eine Fernsteuer-Einheit (40) zum Erzeugen eines Befehlsignals, das einen Identifikations-Code beinhaltet.

18. Ein Motorfahrzeug (1) mit:
einem Fahrzeugkörper (2), indem ein Kabelstrang (110) die Fernsteuer-Aufnahme-Einheit (36) und der registrierungs-zugeordnete Kabelstrang (120) angeordnet sind;
ein Rad (14, 15) montiert an den Fahrzeugkörper (2); und
ein Fernsteuer-System (40, 36, 50) gemäß irgendeinem der Ansprüche 9 bis 17.

## Revendications

1. Procédé d'enregistrement d'une unité de télécommande (40) dans une unité de réception de télécommande (36) connectée via un faisceau de câblage (110) à un dispositif (50) installé dans un corps de véhicule (2), le procédé comprenant :
une étape de connexion d'un faisceau de câblage dédié à l'enregistrement (120) entre le faisceau de câblage (110) et l'unité de réception de télécommande (36) et de commande de transition de l'unité de réception de télécommande (36) en mode d'enregistrement ; et
une étape de commande de génération d'un code d'identification par l'unité de télécommande (40) et de réception du code d'identification par l'unité de réception de télécommande (36) dans le mode d'enregistrement pour enregistrer le code d'identification reçu par l'unité de réception de télécommande (36) dans une mémoire d'enregistrement (107M).

2. Procédé d'enregistrement d'une unité de télécommande (40) dans une unité de réception de télécommande (36) selon la revendication 1, dans lequel le faisceau de câblage dédié à l'enregistrement (120) comprend une ligne de signal de commande d'enregistrement (125) pour entrer un signal de commande de transition en mode d'enregistrement dans l'unité de réception de télécommande (36), une ligne de niveau de tension prédéterminé (125), et un commutateur (126) qui connecte la ligne de niveau de tension prédéterminé (124) à la ligne de signal de commande d'enregistrement (125), et
l'étape de commande de transition de l'unité de réception de télécommande (36) en mode d'enregistrement comprend une étape de commande du commutateur (126) pour qu'il conduise le courant.

3. Procédé d'enregistrement d'une unité de télécommande (40) dans une unité de réception de télécommande (36) selon la revendication 1 ou 2, dans lequel l'étape d'enregistrement du code d'identification dans la mémoire d'enregistrement (107M) comprend une étape de commande de génération de codes d'identification successivement à partir d'une pluralité d'unités de télécommande (40) quand l'unité de réception de télécommande (36) est en mode d'enregistrement pour enregistrer successivement la pluralité de codes d'identification dans la mémoire d'enregistrement (107M).

4. Procédé d'enregistrement d'une unité de télécommande (40) dans une unité de réception de télécommande (36) selon la revendication 3, comprenant en outre une étape dans laquelle l'unité de réception de télécommande (36) arrête automatiquement le mode d'enregistrement quand un nombre prédéterminé de codes d'identification sont enregistrés dans la mémoire d'enregistrement (107M).

5. Procédé d'enregistrement d'une unité de télécommande (40) dans une unité de réception de télécommande (36) selon l'une quelconque des revendications 1 à 4, comprenant en outre une étape dans laquelle l'unité de réception de télécommande (36) arrête automatiquement le mode d'enregistrement quand un temps prédéterminé s'est écoulé depuis la transition en mode d'enregistrement.

6. Procédé d'enregistrement d'une unité de télécommande (40) dans une unité de réception de télécommande (36) selon l'une quelconque des revendications 1 à 5, dans lequel l'unité de réception de télécommande (36) est connectée à une unité de notification (31, 33, 37, 85),
le procédé comprenant en outre une étape dans laquelle l'unité de réception de télécommande (36) actionne l'unité de notification (31, 33, 37, 85) quand la transition en mode d'enregistrement est mise en oeuvre et quand le mode d'enregistrement est terminé.

7. Procédé d'enregistrement d'une unité de télécommande (40) dans une unité de réception de télécommande (36) selon la revendication 6 dans lequel, quand un code d'identification est enregistré dans la mémoire d'enregistrement (107M), l'unité de réception de télécommande (36) actionne l'unité de notification (31, 33, 37, 85).

8. Procédé d'enregistrement d'une unité de télécommande (40) dans une unité de réception de télécommande (36) selon la revendication 7, dans lequel une pluralité de codes d'identification peuvent être enregistrés dans la mémoire d'enregistrement (107M), et quand un code d'identification est enregistré dans la mémoire d'enregistrement (107M), l'unité de réception de télécommande (36) actionne l'unité de notification (31, 33, 37, 85) pour exprimer le nombre de codes d'identification enregistrés dans la mémoire d'enregistrement (107M).

9. Système de télécommande (40, 36, 50) pour véhicule à moteur, comprenant :
un faisceau de câblage (110) connecté à un dispositif (50) installé dans un corps de véhicule (2) ;
une unité de réception de télécommande (36) agencée dans le corps de véhicule (2), comportant une mémoire d'enregistrement (107M) qui enregistre un code d'identification d'une unité de télécommande (40), pour recevoir et accepter un signal de commande, y compris un code d'identification enregistré dans la mémoire d'enregistrement (107M), provenant de l'unité de télécommande (40) ;
**caractérisé par**
un faisceau de câblage dédié à l'enregistrement (120) interposé entre le faisceau de câblage (110) et l'unité de réception de télécommande (36), qui connecte le faisceau de câblage (10) et l'unité de réception de télécommande (36), pour commander la transition de l'unité de réception de télécommande (36) en mode d'enregistrement afin d'enregistrer dans la mémoire d'enregistrement (107M) un code d'identification généré par l'unité de télécommande (40).

10. Système de télécommande (40, 36, 50) pour véhicule à moteur selon la revendication 9, dans lequel le faisceau de câblage dédié à l'enregistrement (120) comprend une ligne de signal de commande d'enregistrement (125) pour entrer un signal de commande de transition en mode d'enregistrement dans l'unité de réception de télécommande (36), une ligne de niveau de tension prédéterminé (124), et un commutateur (126) qui connecte la ligne de niveau de tension prédéterminé (124) à la ligne de signal de commande d'enregistrement (125).

11. Système de télécommande (40, 36, 50) pour véhicule à moteur selon la revendication 9 ou 10, dans lequel l'unité de réception de télécommande (36) est configurée pour accepter et enregistrer successivement une pluralité de codes d'identification dans la mémoire d'enregistrement (107M) en mode d'enregistrement.

12. Système de télécommande (40, 36, 50) pour véhicule à moteur selon la revendication 11, dans lequel l'unité de réception de télécommande (36) est configurée pour arrêter automatiquement le mode d'enregistrement quand un nombre prédéterminé de codes d'identification sont enregistrés dans la mémoire d'enregistrement (107M).

13. Système de télécommande (40, 36, 50) pour véhicule à moteur selon l'une quelconque des revendications 9 à 12, dans lequel l'unité de réception de télécommande (36) est configurée pour arrêter automatiquement le mode d'enregistrement quand un temps prédéterminé s'est écoulé depuis la transition en mode d'enregistrement.

14. Système de télécommande (40, 36, 50) pour véhicule à moteur selon l'une quelconque des revendications 9 à 13, dans lequel l'unité de réception de télécommande (36) est configurée pour pouvoir être connectée à une unité de notification (31, 33, 37, 85) agencée dans le corps de véhicule, et l'unité de réception de télécommande (36) est agencée pour actionner l'unité de notification (31, 33, 37, 85) lors de la transition en mode d'enregistrement et lors de l'arrêt du mode d'enregistrement.

15. Système de télécommande (40, 36, 50) pour véhicule à moteur selon la revendication 14, dans lequel l'unité de réception de télécommande (36) actionne l'unité de notification (31, 33, 37, 85) quand un code d'identification est enregistré dans la mémoire d'enregistrement (107M).

16. Système de télécommande (40, 36, 50) pour véhicule à moteur selon la revendication 15, dans lequel
une pluralité de codes d'identification peuvent être enregistrés dans la mémoire d'enregistrement (107M), et
l'unité de réception de télécommande (36) est configurée pour commander à l'unité de notification (31, 33, 37, 85) d'exprimer le nombre de codes d'identification enregistrés dans la mémoire d'enregistrement (107M) quand un nouveau code d'identification est enregistré dans la mémoire d'enregistrement (107M).

17. Système de télécommande (40, 36, 50) pour véhicule à moteur selon l'une quelconque des revendications 9 à 16, comprenant en outre une unité de télécommande (40) pour générer un signal de commande qui comprend un code d'identification.

18. Véhicule à moteur (1) comprenant :
un corps de véhicule (2) dans lequel sont agencés le faisceau de câblage (110), l'unité de réception de télécommande (36) et le faisceau de câblage dédié à l'enregistrement (120) ;
une roue (14, 15) montée sur le corps de véhicule (2) ; et
un système de télécommande (40, 36, 50) selon l'une quelconque des revendications 9 à 17.
